(19) Europäisches Patentamt

European Patent Office

Office européen des brevets

(11) **EP 1 181 328 B1**

(12) **EUROPÄISCHE PATENTSCHRIFT**

(45) Veröffentlichungstag und Bekanntmachung des Hinweises auf die Patenterteilung:
**08.01.2003   Patentblatt 2003/02**

(21) Anmeldenummer: **00936671.7**

(22) Anmeldetag: **12.05.2000**

(51) Int Cl.$^7$: **C08J 11/08**, C08J 3/09

(86) Internationale Anmeldenummer:
**PCT/DE00/01475**

(87) Internationale Veröffentlichungsnummer:
**WO 00/069952 (23.11.2000 Gazette 2000/47)**

(54) **BESCHLEUNIGUNG DER PHASENTRENNUNG VON POLYMER-ENTHALTENDEN FLÜSSIGEN PHASEN**

ACCELERATION OF THE PHASE SEPARATION OF LIQUID PHASES WHICH CONTAIN POLYMERS

ACCELERATION DE LA SEPARATION DE PHASES LIQUIDES CONTENANT DES POLYMERES

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **14.05.1999   DE 19922944**

(43) Veröffentlichungstag der Anmeldung:
**27.02.2002   Patentblatt 2002/09**

(73) Patentinhaber: **Der Grüne Punkt-Duales System Deutschland Aktiengesellschaft 51145 Köln (DE)**

(72) Erfinder:
• **SADOWSKI, Gabriele**
  **D-15366 Hönow (DE)**
• **ARLT, Wolfgang**
  **D-16540 Hohen Neuendorf (DE)**
• **SEILER, Matthias**
  **D-13469 Berlin (DE)**
• **THIELE, Andreas**
  **D-52064 Aachen (DE)**

(74) Vertreter: **Tönhardt, Marion, Dr. Forrester & Boehmert, Pettenkoferstrasse 20-22 80336 München (DE)**

(56) Entgegenhaltungen:
**GB-A- 1 452 041          US-A- 2 399 558
US-A- 2 801 234**

**Beschreibung**

Vermischte Polymere können durch eine Phasentrennung flüssig-flüssig getrennt werden [l]. Dabei sind die Polymere in allen Phasen, allerdings selektiv getrennt, vorhanden. Flüssige Phasen mit nicht unerheblichen Polymergehalten haben hohe Viskositäten. Unter Polymeren werden technisch oder biologisch hergestellte Makromoleküle verstanden, die ein Molgewicht größer 1000 Dalton haben. Unter Polymeren verschiedener Art werden chemisch oder strukturell ungleiche Polymere wie HDPE, LDPE, PP oder PVC verstanden.

Für die Wirtschaftlichkeit eines solchen thermischen Trennverfahrens sind die Absetzzeiten bei den Entmischungsvorgängen maßgebend, da dadurch die Raum-Zeit-Ausbeuten bestimmt werden. Zudem tragen lange Verweilzeiten dazu bei, dass Zersetzungsreaktionen Raum greifen.

Zwei- oder mehrphasig flüssige Systeme enthalten im dispergierten Zustand eine kontinuierliche Phase (KP) und eine oder mehrere diskontinuierliche Phasen (DP). In der Literatur [2] wird das Zusammenlaufen und Absetzen der diskontinuierlichen Phase in mehrere Abschnitte unterteilt:

- Koaleszenz von Einzeltropfen zu größeren Tropfen
- Dichte-kontrolliertes Auf- oder Absteigen der größeren Tropfen
- Vereinigung der größeren Tropfen mit bereits gebildeter Phase

Bei diesen Vorgängen ist insbesondere die Steig- bzw. Sinkgeschwindigkeit von Einzeltropfen wichtig. Eine vergleichsweise einfache mathematische Beschreibung wird erhalten, wenn die Tropfen als starre Kugeln in der KP angesehen werden.

Die Beschreibung der Bewegung kugelförmiger fester Partikel in einer kontinuierlichen Phase erfolgt nach Clift, R. et. al. [3] und Brauer [2] durch Verwendung der Bewegungsgleichung. Die Bewegungsgleichung (Gl. 1) stellt einen Ausdruck für die stationäre Fallgeschwindigkeit kugelförmiger Partikel dar.

$$w_P = \sqrt{\frac{4}{3} \cdot \frac{\rho_P - \rho_F}{\rho_F} \cdot g \cdot d_p \cdot \frac{1}{\xi}} \qquad \text{Gl. (1)}$$

Dabei repräsentiert $w_P$ die Partikelsink- oder steiggeschwindigkeit, $\rho_P$ bzw. $\rho_F$ die Dichte der diskontinuierlichen (Index P) bzw. der kontinuierlichen Phase (Index F), g die Erdbeschleunigung, $d_P$ den Partikeldurchmesser und $\xi$ den Widerstandsbeiwert.

Gleichung 1 gilt allgemein für feste oder fluide hochviskose Partikel. Die besonderen Eigenschaften der Phasengrenzfläche werden durch den Widerstandsbeiwert $\xi$ erfasst, für den folgender Zusammenhang gilt:

$$\xi \propto \frac{1}{Re} \qquad \text{Gl. (2)}$$

mit

$$Re = \frac{w_P d_P}{\nu_F} = 18 \cdot \left( \sqrt{1 + \frac{\sqrt{Ar}}{9}} - 1 \right)^2 \qquad \text{Gl. (3)}$$

In Gleichung 3 stellt $\nu_F$ die kinematische Viskosität der kontinuierlichen Phase und Ar die Archimedes-Zahl dar. Die Einführung der dimensionslosen Archimedes-Zahl ist sinnvoll, da sich hierdurch die Partikelsinkgeschwindigkeit $w_P$ in Gleichung 1 in expliziter Form darstellen lässt. Dabei gilt:

$$Ar = \frac{\rho_P - \rho_F}{\rho_F} \cdot \frac{g \cdot d_P^3}{\nu_F^2} \qquad \text{Gl. (4)}$$

Gleichung (4) lehrt, dass nur die Viskosität der kontinuierlichen Phase, die Partikeldurchmesser der diskontinuierlichen Phase und die Dichtedifferenz zwischen der kontinuierlichen und diskontinuierlichen Phase für die Abscheidung wichtig sind. Kurze Verweilzeiten sind vorteilhaft, um Betriebs- und Investitionskosten zu sparen und chemische Reaktionen zu unterdrücken.

Nach der Lehre der Literatur kann die Absetzzeit von Phasen insbesondere durch Absenkung der Viskosität der KP verbessert werden. Literaturbekannte Möglichkeiten sind die Anhebung der Temperatur oder die Änderung der Natur des Lösungsmittels, das neben dem Polymer die KP bildet, beide Maßnahmen mit dem Ziel, die Viskosität der KP herabzusetzen. Die genannten Maßnahmen sind bei der Trennung vermischter Polymere durch Flüssig-Flüssig-Phasentrennung nicht zielführend, da

- die Temperatur nicht nur die Viskosität sondern über die Thermodynamik insbesondere die Reinheit/Ausbeute der zu trennenden Polymere ändert. Damit muss die Verbesserung der Absetzzeit mit einer Verschlechterung der Selektivität erkauft werden.
- die Änderung der Natur dss Lösungsmittels die Thermodynamik so stark ändert, dass entweder die Trenntemperaturen in unwirtschaftliche Bereiche verschoben werden oder die Phasentrennung im Bereich technisch erreichbarer Temperaturen nicht mehr existiert.

Dieses Problem wird durch ein Verfahren nach Anspruch 1 auf elegante und neuartige Weise gelöst. Vorteilhafte Ausgestaltungen sind Gegenstand der Unteransprüche.

Es wird beispielhaft die thermische Trennung von Polyolefingemischen als Polymer verschiedener Art mit n-Alkanen mit 5 bis 7 Kohlenstoffatomen im Molekül als Lösungsmittel betrachtet. Die durch die Anmeldung vermittelte technische Lehre ist jedoch auf jedes andere Trennverfahren anwendbar, das die Trennung von Polymergemischen durch Bildung flüssiger Phasen beinhaltet.

Das in [1] beschriebene Verfahren trennt Polyolefine dadurch, dass in n-Hexan bei 180°C zwei flüssige Phasen entstehen, wobei die obere, leichte Phase unter gewissen Randbedingungen Polyethylen aus der Hochdrucksynthese (LDPE) und die untere Polyethylen aus der Niederdrucksynthese (HDPE) enthält. Aufgrund der Menge bildet die wenig viskose, obere Phase im dispergierten System die KP und die sehr viskose, untere Phase die DP. Die geringe Viskosität der oberen Phase führt jedoch nicht zu technisch akzeptablen Absetzzeiten, so dass oben genannte Nachteile (Kosten, Reaktionen) greifen.

Versuchsreihen haben jedoch überraschenderweise ergeben, dass die Verwendung von verzweigten Lösungsmitteln gleicher Kohlenstoffzahl die Absetzzeiten entscheiden vorteilhaft verändern. Dabei ist die Viskosität der KP für das nicht-verzweigte und das verzweigte Lösungsmittel in etwa gleich, so dass der Effekt zur Zeit nicht erklärt werden kann. Unter verzweigten Lösungsmitteln werden solche aliphatischen Stoffe verstanden, in denen mindestens ein Kohlenstoff-Atom mehr als zwei Kohlenstoff-Atome als Nachbarn hat und die neben weiteren C- und H-Atomen auch fimktionelle Gruppen tragen dürfen.

Zur Veranschaulichung der patentgemäßen Vorgehensweise soll das verzweigte Lösungsmittel 2,3-Dimethylbutan dem unverzweigten Lösungsmittel n-Hexan gegenübergestellt werden.

Beispiel 1

Es wurden zwei Versuchsreihen durchgeführt, die die Trennung eines Polyethylen-Polypropylen-Gemisches zum Ziel hatten. Als Polyolefine wurden HDPE (high-density-Polyethylene), LDPE (low-density-Polyethylene) und Polypropylen PP im Verhältnis 15 / 43 /42 eingesetzt, wobei der Gesamtpolyolefingehalt der Lösung 20 Gew% betrug. Für die erste Versuchsreihe V_1 wurde n-Hexan und für die zweite Versuchsreihe V_2 2,3-Dimethylbutan als Lösungsmittel verwendet. Die Absetzzeiten der Phasen sowie die Lösungsviskositäten wurden beobachtet. Sie werden in Tabelle 1 dargestellt. Dabei ist auffällig, dass sich Zeiten von 300 min beim unverzweigten Lösungsmittel technisch nicht oder sehr schwer umsetzen lassen.

Die Reinheiten der verschiedenen Polymeren waren in beiden Phasen in beiden Versuchen fast gleich, da die Natur des Lösungsmittels nicht geändert wurde (es handelt sich in beiden Fällen um ein Hexan).

Überraschend sind jedoch die erheblich geringeren Absetzzeiten im Versuch V_2 mit dem verzweigten Lösungsmittel. Obwohl sich die Viskosität der KP und die Dichtedifferenz $\rho_P$-$\rho_F$ sich bei den Versuchen nicht wesentlich geändert hat, wurde überraschenderweise aber festgestellt, dass sich das System mit dem verzweigten Lösungsmittel um den Faktor 150 schneller entmischte als das System mit dem n-Alkan als Lösungsmittel.

Tabelle 1:

| Versuchsreihen zur Polyolefintrennung mit einem verzweigten (Versuch V_2) und einem unverzweigtem Lösungsmittel (Versuch V_1) | | | | | | |
|---|---|---|---|---|---|---|
| Versuch | Lösungsmittel | $W_{Feed. Pol}$ [Gew%] | System-temperatur [°C] | Absetzzeit der Phasen [min] | Viskosität der oberen Phase KP | Viskosität der unteren Phase DP |
| V_1 | n-Hexan | 20 | 180 | 300 | niedrig | hoch |
| V_2 | 2,3-Dimethylbutan | 20 | 180 | 2 | niedrig | niedrig |

EP 1 181 328 B1

Diese verringerten Absetzzeiten führen nach der Lehre der Literatur zu verkleinerten Abscheidebehältern und damit zur Reduktion von Investitionskosten und von Verweilzeiten bei den notwendigen hohen Temperaturen. Die Lehre dieses Patentes kann auf alle Trennungen von flüssigen Phasen angewandt werden, die Polymere enthalten und Lösungsmittel, von denen verzweigte und unverzweigte Formen existieren.

Zitate

[1] DE 199 05 029 A, nach dem Prioritätstag der vorliegenden Anmeldung veröffentlicht
[2] Brauer, H.: Grundlagen der Einphasen- und Mehrphasenströmungen; Verlag Sauerländer, Aarau, 1971
[3] Clift, R.; Grace, J.R.; Weber, M.E.: Bubbles, Drops and Parkicles, Academic Press, New York, 1978

**Patentansprüche**

1. Verfahren zur Beschleunigung der Trennung verschiedene Polymere enthaltender Phasen, **dadurch gekennzeichnet, daß**

   a) die Polymere in einem verzweigten Lösungsmittel oder Lösungsmittelgemisch gelöst werden und

   b) die sich bildenden Lösungsmittelphasen, die gelöste Polymere verschiedener Art in unterschiedlicher Konzentration enthalten, nach dem Absetzen getrennt werden.

2. Verfahren nach Anspruch 1, **dadurch gekennzeichnet, daß** die Lösungsmittel so gewählt sind, daß die Absetzzeiten der Phasen im verzweigten Lösungsmittel oder Lösungsmittelgemisch kürzer sind als die im nicht verzweigten Lösungsmittel oder Lösungsmittelgemisch.

3. Verfahren nach Anspruch 1 oder 2, **dadurch gekennzeichnet, daß** die Polymere verschiedener Art Gemische von Polyolefinen sind und das Lösungsmittel ein verzweigtes Alkan mit einer Kohlenstoffzahl zwischen 4 und 16 ist.

4. Verfahren nach Anspruch 3, **dadurch gekennzeichnet, daß** das Lösungsmittel ein verzweigtes Alkan mit einer Kohlenstoffzahl zwischen 4 und 10 ist.

5. Verfahren nach Anspruch 3, **dadurch gekennzeichnet, daß** das Lösungsmittel ein verzweigtes Alkan mit einer Kohlenstoffzahl zwischen 6 und 8 ist.

6. Verfahren nach einem der Ansprüche 1 bis 5, **dadurch gekennzeichnet, daß** das Lösungsmittel Dimethylbutan oder Methylpentan ist.

7. Verfahren nach einem der Ansprüche 1 bis 6, **dadurch gekennzeichnet, daß** die eingesetzten Polyolefine aus Abfall zur Verwertung entstammen.

**Revendications**

1. Procédé pour l'accélération de la séparation de phases contenant des polymères différents dans lequel :

   a) les polymère sont dissous dans un solvant ou un mélange de solvants ramifié(s), et
   b) les phases de solvants qui se forment, qui contiennent des polymères de types différents dissous, à des concentrations différentes, sont séparées après le dépôt.

2. procédé selon la revendication 1, dans lequel les solvants sont choisis de telle sorte que les temps de dépôt des phases dans le solvant ou le mélange de solvants ramifié(s) soient plus courts que ceux observés dans le solvant ou le mélange de solvants non ramifié(s).

3. Procédé selon l'une des revendications 1 ou 2, dans lequel les polymères de types différents sont des mélanges de polyoléfines et le solvant est un alcane ramifié comportant un nombre de carbones entre 4 et 16.

4

**4.** Procédé selon la revendication 3, dans lequel le solvant est un alcane ramifié comportant un nombre de carbones entre 4 et 10.

**5.** Procédé selon la revendication 3, dans lequel le solvant est un alcane ramifié comportant un nombre de carbones entre 6 et 8.

**6.** Procédé selon l'une quelconque des revendications 1 à 5, dans lequel le solvant est le diméthylbutane ou le méthylpentane.

**7.** Procédé selon l'une quelconque des revendications 1 à 6, dans lequel les polyoléfines utilisées proviennent de déchets destinés à la récupération.

**Claims**

**1.** Method of accelerating the separation of phases containing different polymers, **characterised in that**

a) the polymers are dissolved in a branched solvent or solvent mixture and

b) the resulting solvent phases, which contain dissolved polymers of different kinds in different concentrations, are separated after settling.

**2.** Method according to claim 1, **characterised in that** the solvents are so selected that the settling times of the phases in the branched solvent or solvent mixture are shorter than those in the non-branched solvent or solvent mixture.

**3.** Method according to claim 1 or 2, **characterised in that** the polymers of different kinds are mixtures of polyolefins and the solvent is a branched alkane having from 4 to 16 carbon atoms.

**4.** Method according to claim 3, **characterised in that** the solvent is a branched alkane having from 4 to 10 carbon atoms.

**5.** Method according to claim 3, **characterised in that** the solvent is a branched alkane having from 6 to 8 carbon atoms.

**6.** Method according to any one of claims 1 to 5, **characterised in that** the solvent is dimethylbutane or methylpentane.

**7.** Method according to any one of claims 1 to 6, **characterised in that** the polyolefins used originate from waste for recycling.